# EUROPÄISCHE PATENTANMELDUNG

(11) **EP 2 025 443 A1**
(43) Veröffentlichungstag der Anmeldung: **18.02.2009**
(21) Anmeldenummer: 08013984.3
(22) Anmeldetag: 05.08.2008
(51) Int. Cl.: B23K 11/30

(54) **Vorrichtung zur Überwachung eines Kühlkreislaufs**

(30) Priorität: 13.08.2007 DE 202007011304 U
(71) Anmelder: Bürkert Werke GmbH & Co. KG, 74653 Ingelfingen (DE)
(72) Erfinder: Lotha, Hartmuth, 74635 Kupferzell (DE); Dillenseger, André, 67220 Triembach au Val (FR)
(74) Vertreter: Prinz & Partner

(57) **Zusammenfassung**

Die Erfindung betrifft eine Vorrichtung zur Überwachung eines Kühlkreislaufs mit einem Kühlmittelzulauf zu und einem Kühlmittekrücklauf von einem zu kühlenden Objekt, insbesondere von Schweißkappen einer Schweißvorrichtung, wobei die Vorrichtung zwei Ventile (22, 24) zum Absperren eines Teils des Kühlkreislaufs, in dem sich das zu kühlendes Objekt befindet, sowie eine Steuerung zur Ansteuerung der Ventile (22, 24) umfasst, dadurch gekennzeichnet, dass die Steuerung für eine zeitversetzte Schaltung der Ventile (22, 24) sorgt.

## Beschreibung

Die Erfindung betrifft eine Vorrichtung zur Überwachung eines Kühlkreislaufs mit einem Kühlmittelzulauf zu und einem Kühlmittekrücklauf von einem zu kühlenden Objekt, insbesondere von Schweißkappen einer Schweißvorrichtung, wobei die Vorrichtung zwei Ventile zum Absperren eines Teils des Kühlkreislaufs, in dem sich das zu kühlendes Objekt befindet, sowie eine Steuerung zur Ansteuerung der Ventile umfasst.

In der Roboter-Schweißtechnik (beispielsweise beim Karosseriebau in der Automobilindustrie) kommen Schweißzangen mit austauschbaren Schweißkappen zum Einsatz, deren Verschleiß durch eine gute Kühlung deutlich verzögert werden kann. Hierzu sind Kühlsysteme mit Kühlkreisläufen vorgesehen, in denen z. B. mit Glykol und weiteren Additiven versetztes Wasser als Kühlmittel verwendet wird. Bei einem Wechsel der Schweißkappen wird der Kühlkreislauf im Bereich der Schweißkappen automatisch abgesperrt, um einen Austritt des unter Druck stehenden Kühlmittels zu verhindern. Da trotz des Einsatzes von Schnellschließventilen eine druckneutrale Abdichtung nicht möglich ist, kommt es aufgrund des weiterhin im abgesperrten Teil des Kühlkreislaufs herrschenden Drucks zu einem unerwünschten Verspritzen von Kühlmittel.

Aus der EP 0 433 586 A1 ist eine Vorrichtung zum Kühlen von Schweißkappen einer Schweißvorrichtung mit einem Absaugsystem bekannt, das für eine Absperrung eines Teils der Kühlleitung sorgt. Das Absaugen des Kühlmittels erfolgt mit Hilfe einer pneumatisch betätigten Kolben/Zylinder-Einheit. Der abgesperrte Teil der Leitung wird komplett entleert, was den Nachteil hat, dass beim Wiederbefüllen störende Luft in die Leitung geraten kann.

Bekannt ist aus der EP 1 688 205 eine gattungsgemäße, ebenfalls pneumatisch arbeitende Vorrichtung. Bei dieser Vorrichtung ist eine an eine Kühlleitung angeschlossene Expansionseinrichtung mit einer variablen Expansionskammer vorgesehen. Ein Verspritzen von Kühlmittel, das beim Schließen der Ventile durch den hohen Druck in der Kühlleitung verursacht wird, wird hier vermieden, indem die Expansionskammer bei einem Schweißkappenwechsel eine sofortige Druckreduzierung in der Kühlleitung ermöglicht, so dass kein unter hohem Druck stehendes Kühlmittel austreten kann.

Aufgabe der Erfindung ist es, eine Vorrichtung zu schaffen, die unabhängig von Druckluft ist und allein mit Hilfe elektrischer Versorgung auskommt.

Gemäß der Erfindung ist bei einer Vorrichtung der eingangs genannten Art vorgesehen, dass die Steuerung für eine zeitversetzte Schaltung der Ventile sorgt. Bereits durch diese Maßnahme kann der Überdruck im abgesperrten Teil des Kühlkreislaufs vermindert werden, ohne dass eine pneumatisch betriebene Einrichtung notwendig ist. Dadurch, dass das (vorzugsweise im Rücklauf angeordnete) zweite Ventil später als das (vorzugsweise im Zulauf angeordnete) erste Ventil schließt, steht das eingesperrte Kühlmittel nicht mehr unter dem im normalen Betrieb herrschenden Druck.

Ein noch verbleibender Restdruck im abgesperrten Teil des Kühlkreislaufs kann gemäß einer ersten bevorzugten Ausführungsform der Erfindung durch eine Pumpe abgebaut werden, die Kühlmittel aus dem abgesperrten Teil des Kühlkreislaufs absaugt. Die Pumpe wird rein elektrisch betrieben.

Eine einfache Lösung sieht vor, dass die Pumpe das Kühlmittel über einen Bypass am zweiten Ventil vorbei in den Rücklauf pumpt.

Um eine unnötige und nachteilige Entleerung des abgesperrten Teils des Kühlkreislaufs zu vermeiden, wird die Pumpe nach Abbau des Überdrucks im abgesperrten Teil des Kühlkreislaufs abgeschaltet.

Eine alternative zweite bevorzugte Ausführungsform sieht anstelle der Pumpe eine Expansionseinrichtung mit einem Expansionsraum vor, in den Kühlmittel aus dem abgesperrten Teil des Kühlkreislaufs einströmen kann.

Das Volumen des Expansionsraums ist vorzugsweise durch die Bewegung eines Kolbens einstellbar, der mit Hilfe eines Motors verschiebbar ist. Auch der Motor benötigt außer elektrischer Energie keine weiteren Antriebsmittel.

Auch bei dieser Ausführungsform wird zur Vermeidung einer Entleerung des abgesperrten Teils des Kühlkreislaufs der Motor nach Abbau des Überdrucks im abgesperrten Teil des Kühlkreislaufs abgeschaltet.

Die Endpositionen des Kolbens können durch Endschalter festgelegt werden.

Zum Schutz des elektrischen Kolbenantriebs ist der Expansionsraum der Expansionseinrichtung durch wenigstens eine Dichtung am Kolben abgedichtet.

Eine komfortable Kontrolle der Dichtung wird durch eine Konstruktion ermöglicht, bei der der Kolben mit wenigstens zwei axial voneinander beabstandeten O-Ringen gegen das Gehäuse der Expansionseinrichtung abgedichtet ist, und zwischen den beiden O-Ringen ein Zwischenraum gebildet ist, wobei das Gehäuse eine Bohrung aufweist, die in den Zwischenraum mündet.

Die Notwendigkeit eines Schweißkappenwechsels kann mittels eines Durchflusssensors erkannt werden, der den Rücklauf überwacht, insbesondere hinsichtlich Druck(abfall) oder (Verringerung der) Durchflussmenge (pro Zeiteinheit).

Die Erfindung hat allgemein den Vorteil, dass keine Wiederbefüllung des abgesperrten Teils des Kühlkreislaufs erfolgen muss, bei der unerwünschte Luft in die Leitungen gelangen könnte.

Weitere vorteilhafte und zweckmäßige Ausgestaltungen der erfindungsgemäßen Vorrichtung ergeben sich aus den Unteransprüchen.

Die Erfindung wird nachfolgend anhand bevorzugter Ausführungsformen unter Bezugnahme auf die beigefügten Zeichnungen näher erläutert. In den Zeichnungen zeigen:
Figur 1 eine erste Ausführungsform der Erfindung in perspektivischer Draufsicht;
Figur 2 eine perspektivische Unteransicht der ersten Ausführungsform;
Figur 3 eine Schnittansicht einer Expansionseinrichtung einer zweiten Ausführungsform der Erfindung in einem ersten Zustand; und
Figur 4 eine gegenüber der Ansicht der Figur 3 um 90° gedrehte Schnittansicht der Expansionseinrichtung in einem zweiten Zustand.

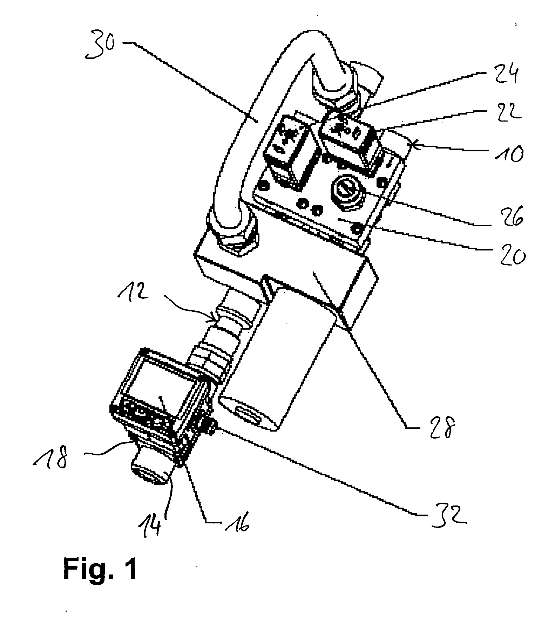

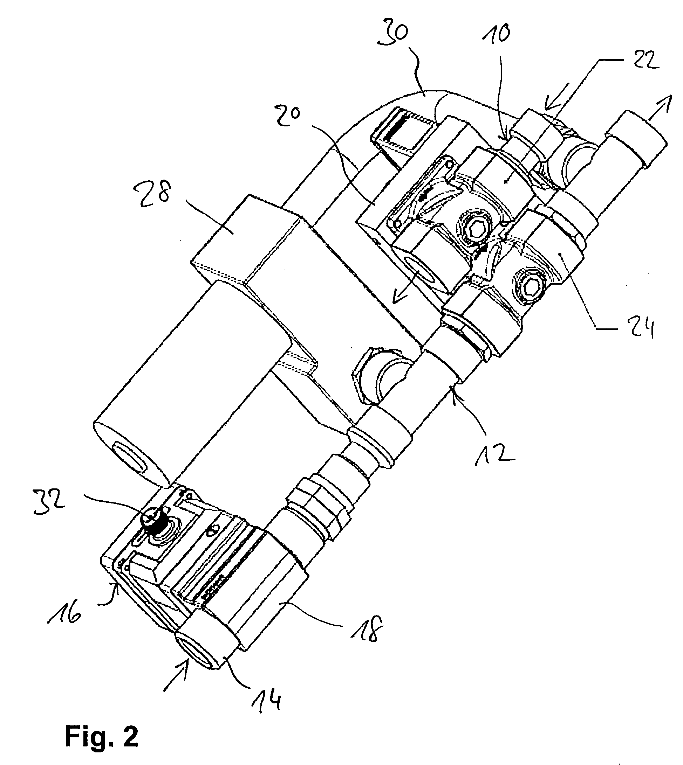

In den Figuren 1 und 2 ist eine erste Ausführungsform der erfindungsgemäßen Vorrichtung dargestellt, die in einen Kühlkreislauf zur Kühlung von Schweißkappen (Elektroden) einer Roboter-Schweißzange eingefügt ist. Als Zulauf werden diejenigen Leitungsteile des Kühlkreislaufs bezeichnet, in denen Kühlmittel zu den zu kühlenden Schweißkappen hinströmt. Dementsprechend werden diejenigen Leitungsteile, in denen das erwärmte Kühlmittel von den Schweißkappen wegströmt, als Rücklauf bezeichnet.

Die Vorrichtung weist einen ersten Leitungsstrang 10, der in den Zulauf des Kühlkreislaufs integriert ist, und einen zweiten Leitungsstrang 12 auf, der in den Rücklauf integriert ist. Die Fließrichtung des Kühlmittels ist durch die Pfeile in Figur 2 angegeben.

Am Eingangsanschluss 14 des zweiten Leitungsstrangs 12 ist ein Durchflusssensor 18 mit einem Display 16 angebracht. Zwei auf einer Platte 20 montierte Magnetventile 22, 24 dienen zur Sperrung des Zulaufs des Kühlkreislaufs (erstes Ventil 22) bzw. des Ablaufs (zweites Ventil 24). Beide Ventile 22, 24 sind mit einer Vorsteuerung versehen. Auf der Platte 20 ist auch eine optionale Drossel 26 montiert.

Die Vorrichtung umfasst außerdem eine motorgetriebene Pumpe 28 mit einem stromaufwärts des zweiten Ventils 24 in den zweiten Leitungsstrang 12 mündenden Sauganschluss. Der Druckanschluss der Pumpe 28 mündet in einen Bypass 30, der am zweiten Ventil 24 vorbei in den Teil des Rücklaufs führt, der stromabwärts des zweiten Ventils 24 liegt.

Die Steuerung der Vorrichtung erfolgt mittels einer (nicht gezeigten) elektronischen Steuereinheit, die über einen Anschluss 32 mit dem Durchflusssensor 18 verbunden ist.

Im folgenden wird die Funktionsweise der erfindungsgemäßen Vorrichtung erläutert. Das Kühlmittel fließt durch den ersten Leitungsstrang 10 der Vorrichtung zu den Schweißkappen, um diese zu kühlen. Mittels der optionalen Drossel 26 kann der Kühlmitteldurchfluss zur Einstellung der Kühlleistung reguliert werden.

Mit Hilfe des Durchflusssensors 18 wird der Druck im Rücklauf des Kühlkreislaufs überwacht. Ein Druckabfall, der beispielsweise infolge eines Lochs in einer Schweißkappe auftreten kann, wird vom Durchflusssensor 18 erkannt und der Steuereinheit gemeldet. Bei Unterschreitung eines einprogrammierten Schwellwerts schließen die beiden normalerweise offenen Magnetventile 22, 24, so dass der Teil des Kühlkreislaufs, in dem sich die zu kühlenden Schweißkappen befinden, abgesperrt ist. Das in diesem Teil zwischen den beiden Ventilen 22, 24 eingesperrte Kühlmittel steht dabei unter Druck. Dieser Druck ist aber bereits verringert, weil die Steuereinheit dafür sorgt, dass die Ventile 22, 24 nicht gleichzeitig, sondern zeitversetzt schließen: Zunächst wird der Zulauf durch das erste Ventil 22 gesperrt, und erst danach der Rücklauf durch das zweite Ventil 24. Der Steuerdruck für das zweite Ventil 24 wird am ersten Ventil 22 abgezweigt, so dass das Schalten des zweiten Ventils 24 unabhängig vom Druck zwischen den beiden Ventilen 22, 24 erfolgt.

Nach dem Schließen der Ventile 22, 24 verbleibt im abgesperrten Teil des Kühlkreislaufs trotzdem ein Restdruck, der abgebaut werden muss, wenn ein Kühlmittelverlust beim Wechsel der Schweißkappen verhindert werden soll. Dazu wird die Pumpe 28 so angesteuert, dass ein Teil des eingesperrten Kühlmittels bis zum Druckausgleich abgesaugt und über den Bypass 30 am zweiten Ventil 24 vorbei in den stromabwärts des zweiten Ventils 24 gelegenen Teil des Rücklaufs eingespeist wird. Der abgesperrte Teil des Kühlkreislaufs wird also nicht entleert, es wird nur der Überdruck abgebaut. Der abgesperrte Teil des Kühlkreislaufs bleibt mit Kühlmittel befüllt.

Nachfolgend wird eine zweite Ausführungsform der erfindungsgemäßen Vorrichtung beschrieben, die in weiten Teilen ähnlich wie die erste Ausführungsform aufgebaut ist, so dass nur auf die Unterschiede eingegangen wird.

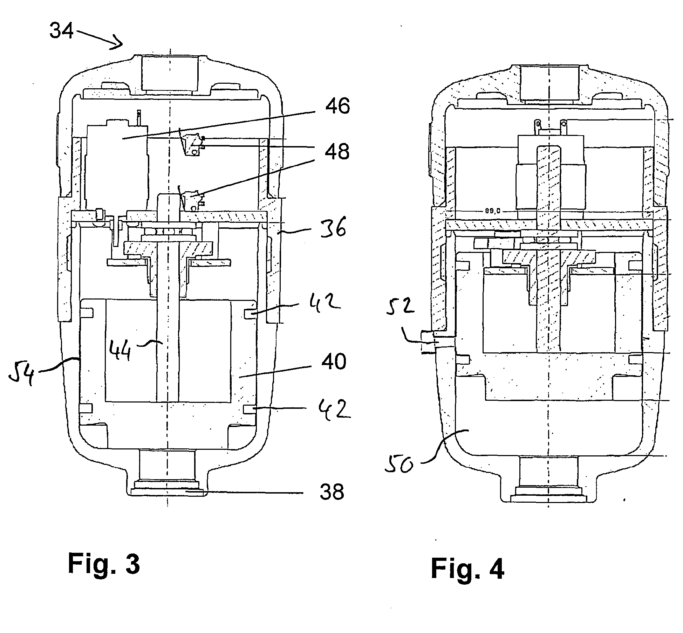

Bei der zweiten Ausführungsform ist anstelle der Pumpe und des Bypass eine Expansionseinrichtung 34 vorgesehen, die in den Figuren 3 und 4 im Detail gezeigt ist. Die Expansionseinrichtung 34 hat ein im wesentlichen zylinderförmiges Gehäuse 36 und ist über einen stirnseitigen Anschluss 38 T-artig an eine Kühlleitung des Kühlkreislaufs angeschlossen. Vorzugsweise ist die Expansionseinrichtung 34 im Rücklauf des Kühlkreislaufs angeordnet, insbesondere an den zweiten Leitungsstrang 12 der Vorrichtung zwischen dem Durchflusssensor 18 und dem zweiten Ventil 24 angeflanscht. Die Expansionseinrichtung 34 kann aber auch an einer beliebigen anderen Stelle des absperrbaren Teils des Kühlkreislaufs positioniert sein.

Die Expansionseinrichtung 34 umfasst einen axial verschiebbaren Kolben 40, der über zwei O-Ringe 42 auf der Innenwand des Gehäuses 36 läuft. Der Kolben 40 ist mit einer Spindel 44 fest verbunden, die von einem Getriebemotor 46 angetrieben wird. Die Endpositionen des Kolbens 40 sind durch Endschalter 48 festgelegt, die mit der Spindel 44 zusammenwirken. Die Abdichtung des Kolbens 40 stellt sicher, dass der Raum in der Expansionseinrichtung 34, in dem sich der elektrische Antrieb befindet, nicht mit dem Kühlmittel in Berührung kommt.

Der Motor 46 lässt sich von der Steuereinheit in Abhängigkeit einstellbarer Größen steuern wie z. B. Zeit, Weg, Druck, deren zeitlicher Änderungen, oder durch eine in der Steuereinheit gespeicherte Ansteuerlogik. Der Motor 46 startet beispielsweise im Falle eines vom Durchflusssensor 18 festgestellten Druckabfalls im Rücklauf des Kühlkreislaufs infolge eines Steuersignals, nachdem zuvor die beiden Ventile 22, 24 (wie oben beschrieben) zeitversetzt Zulauf und Ablauf gesperrt haben. Der Kolben 40 verschiebt sich dann aus der in Figur 3 gezeigten Ausgangsposition axial nach oben, und der dadurch unterhalb des Kolbens 40 entstehende Expansionsraum 50 nimmt das Kühlmittel bis zum Druckausgleich auf. Der maximale Kolbenhub ist in Figur 4 dargestellt. Auch hier wird der abgesperrte Teil des Kühlkreislaufs nicht entleert, sondern nur der Überdruck abgebaut.

Zwischen der Innenwand des Gehäuses 36 und dem Kolben besteht ein (in den Figuren nicht erkennbarer) Spalt, so dass zwischen den beiden O-Ringen 42 ein ringförmiger Zwischenraum 54 gebildet ist, dessen Lage mit der Kolbenbewegung variiert. Eine (nur in Figur 4 sichtbare) Gehäusebohrung 52 verbindet den Zwischenraum 54 nach außen, wobei die axiale Anordnung der Gehäusebohrung 52 so gewählt ist, dass die Gehäusebohrung 52 in jeder im normalen Betrieb der Expansionseinrichtung 34 auftretenden Kolbenstellung in Strömungsverbindung mit dem Zwischenraum 54 steht. Die Gehäusebohrung 52 dient der Kontrolle der Dichtungen 42. Im Falle einer nicht einwandfreien Abdichtung des Kolbens 40 gelangt Kühlmittel in den Zwischenraum 54 und tritt aus diesem durch die Gehäusebohrung 52 aus. Der Kühlmittelaustritt, der sensorisch erfassbar ist, ist also ein direkter Nachweis für nicht intakte Dichtungen 42.

Mit Hilfe der erfindungsgemäßen Vorrichtung lassen sich allgemein in geschlossenen Systemen gewünschte Druckvorlagen einstellen. Die Vorrichtung kann somit auch für andere Anwendungen eingesetzt werden, beispielsweise in Heizkreisläufen.

### Bezugszeichenliste

- 10: erster Leitungsstrang (Zulauf)
- 12: zweiter Leitungsstrang (Rücklauf)
- 14: Eingangsanschluss des zweiten Leitungsstrangs
- 16: Display
- 18: Durchflusssensor
- 20: Platte
- 22: erstes Ventil zum Sperren des Zulaufs
- 24: zweites Ventil zum Sperren des Rücklaufs
- 26: Drossel
- 28: Pumpe
- 30: Bypass
- 32: Anschluss des Durchflusssensors für die Steuereinheit
- 34: Expansionseinrichtung
- 36: Gehäuse
- 38: Anschluss der Expansionseinrichtung an die Kühlleitung
- 40: Kolben
- 42: O-Ringe
- 44: Spindel
- 46: Motor
- 48: Endschalter
- 50: Expansionsraum
- 52: Gehäusebohrung
- 54: Zwischenraum

## Patentansprüche

1. Vorrichtung zur Überwachung eines Kühlkreislaufs mit einem Kühlmittelzulauf zu und einem Kühlmittekrücklauf von einem zu kühlenden Objekt, insbesondere von Schweißkappen einer Schweißvorrichtung, wobei die Vorrichtung zwei Ventile (22, 24) zum Absperren eines Teils des Kühlkreislaufs, in dem sich das zu kühlendes Objekt befindet, sowie eine Steuerung zur Ansteuerung der Ventile (22, 24) umfasst, **dadurch gekennzeichnet, dass** die Steuerung für eine zeitversetzte Schaltung der Ventile (22, 24) sorgt.

2. Vorrichtung nach Anspruch 1, **dadurch gekennzeichnet, dass** das erste Ventil (22) zur Sperrung des Zulaufs vorgesehen ist und vor dem zweiten Ventil (24) geschaltet wird, das zur Sperrung des Rücklaufs vorgesehen ist.

3. Vorrichtung nach Anspruch 2, **dadurch gekennzeichnet, dass** ein Steuerdruck zum Schalten des zweiten Ventils (24) am ersten Ventil (22) abgezweigt wird.

4. Vorrichtung nach einem der vorhergehenden Ansprüche, **gekennzeichnet durch** eine Pumpe (28), die Kühlmittel aus dem abgesperrten Teil des Kühlkreislaufs absaugt.

5. Vorrichtung nach Anspruch 4, **dadurch gekennzeichnet, dass** die Pumpe (28) das Kühlmittel über einen Bypass (30) am zweiten Ventil (24) vorbei in den Rücklauf pumpt.

6. Vorrichtung nach Anspruch 4 oder 5, **dadurch gekennzeichnet, dass** die Pumpe (28) nach Abbau des Überdrucks im abgesperrten Teil des Kühlkreislaufs abgeschaltet wird.

7. Vorrichtung nach einem der Ansprüche 1 bis 3, **gekennzeichnet durch** eine Expansionseinrichtung (34) mit einem Expansionsraum (50), in den Kühlmittel aus dem abgesperrten Teil des Kühlkreislaufs einströmen kann.

8. Vorrichtung nach Anspruch 7, der Expansionsraum (50) in Strömungsverbindung mit dem Rücklauf des abgesperrten Teils des Kühlkreislaufs steht.

9. Vorrichtung nach Anspruch 7 oder 8, **dadurch gekennzeichnet, dass** das Volumen des Expansionsraums (50) durch die Bewegung eines Kolbens (40) einstellbar ist, der mit Hilfe eines Motors (46) verschiebbar ist.

10. Vorrichtung nach Anspruch 9, **dadurch gekennzeichnet, dass** der Motor (46) in Abhängigkeit einer im Kühlkreislauf gemessenen Größe betreibbar ist.

11. Vorrichtung nach Anspruch 9 oder 10, **dadurch gekennzeichnet, dass** der Motor (46) nach Abbau des Überdrucks im abgesperrten Teil des Kühlkreislaufs abgeschaltet wird.

12. Vorrichtung nach einem der Ansprüche 9 bis 11, **dadurch gekennzeichnet, dass** Endpositionen des Kolbens (40) durch Endschalter (48) festgelegt sind.

13. Vorrichtung nach einem der Ansprüche 9 bis 12, **dadurch gekennzeichnet, dass** der Expansionsraum (50) durch wenigstens eine Dichtung (42) am Kolben (40) abgedichtet ist.

14. Vorrichtung nach Anspruch 13, **dadurch gekennzeichnet, dass** der Kolben (40) mit wenigstens zwei axial voneinander beabstandeten O-Ringen (42) gegen das Gehäuse (36) der Expansionseinrichtung (34) abgedichtet ist, und dass zwischen den beiden O-Ringen (42) ein Zwischenraum (54) gebildet ist, wobei das Gehäuse (36) eine Bohrung (52) aufweist, die in den Zwischenraum (42) mündet.

15. Vorrichtung nach einem der vorhergehenden Ansprüche, **dadurch gekennzeichnet, dass** die Steuerung einen Durchflusssensor (18) zur Überwachung des Rücklaufs umfasst.

16. Vorrichtung nach Anspruch 15 und Anspruch 4 oder 9, **dadurch gekennzeichnet, dass** die Steuerung eine mit dem Durchflusssensor (18) verbundene elektronische Steuereinheit umfasst, die die Pumpe (28) bzw. den Motor (46) ansteuert.

17. Vorrichtung nach einem der vorhergehenden Ansprüche, **dadurch gekennzeichnet, dass** die Vorrichtung einen ersten Leitungsstrang (10) hat, der in den Zulauf integriert ist.

18. Vorrichtung nach Anspruch 17, **dadurch gekennzeichnet, dass** in den ersten Leitungsstrang (10) eine einstellbare Drossel (26) eingefügt ist.

19. Vorrichtung nach einem der vorhergehenden Ansprüche, **dadurch gekennzeichnet, dass** die Vorrichtung einen zweiten Leitungsstrang (14) hat, der in den Rücklauf integriert ist.
